# EUROPÄISCHE PATENTANMELDUNG

(11) **EP 2 463 021 A1**
(43) Veröffentlichungstag der Anmeldung: **13.06.2012**
(21) Anmeldenummer: 11009525.4
(22) Anmeldetag: 02.12.2011
(51) Int. Cl.: B01J 8/02, C01B 33/037

(54) **Verfahren zur chemischen Reinigung von metallurgischem Silizium.**

(30) Priorität: 08.12.2010 DE 102010053693
(71) Anmelder: Adensis GmbH, 01129 Dresden (DE)
(72) Erfinder: Acker, Jörg, Prof. Dr., 01157 Dresden (DE)
(74) Vertreter: Freier, Rüdiger

(57) **Zusammenfassung**

Das Reinigungsverfahren zeichnet sich dadurch aus, dass das Silizium (s) und eine Reinigungschemikalie (r) ein chemisches Reaktionsgemisch (u) bilden, das in einem Druckbehälter (2) oder in einem behälterartig ausgebildetem Abschnitt (28), beispielsweise einem geschlossenen Reaktor, oder in einer Rohrleitung (18) bzw. (30) vorliegt. Hier findet ein chemischer Reinigungsprozess statt, wodurch metallische und/oder nicht-metallische Verunreinigungen zu einem Großteil aus dem Silizium (s) entfernt werden, so dass nunmehr ein chemisches Reaktionsgemisch (v) vorliegt, das aus fein verteiltem, gereinigtem Silizium (s') und der teilweise verbrauchten Reinigungschemikalie (r') besteht. Das chemische Reaktionsgemisch (u) ist während des Reinigungsprozesses einem Atmosphärendruck von etwa 1 bar oder bevorzugt einem gegenüber Atmosphärendruck erhöhten Druck ausgesetzt. Alternativ oder zusätzlich ist das chemische Reaktionsgemisch (u) während des Reinigungsprozesses einer gegenüber Zimmertemperatur erhöhten Temperatur ausgesetzt. Während der Temperaturbehandlung kommt es zu einem Druckanstieg, der als Methode zur Druckerhöhung eingesetzt werden kann. Das gereinigte Silizium (s') oder das chemische Reaktionsgemisch (v) wird nach erfolgter Reinigungsbehandlung aus dem Druckbehälter (2) oder aus dem behälterartig ausgebildetem Abschnitt (28) oder aus der Rohrleitung (18) bzw. (30) kontinuierlich oder diskontinuierlich entnommen.

## Beschreibung

Die Erfindung bezieht sich auf ein Verfahren zur Erhöhung der Reinheit von Silizium, das einen Gehalt von mehr als 90 Gewichtsprozent Silizium aufweist, in fein zerkleinerter Form vorliegt und Korngrößen kleiner als 500 µm, vorzugsweise kleiner als 250 µm, besitzt, durch einen chemischen Reinigungsprozess. Sie bezieht sich auch auf eine Einrichtung zur Durchführung des Verfahrens.

In der Literatur sind zahlreiche Verfahren bekannt und beschrieben, in denen Silizium mit verschiedenen Chemikalien behandelt wird, um die im Silizium enthaltenen Verunreinigungen zu entfernen und die Reinheit des Siliziums zu erhöhen. Die meisten dieser Entwicklungen zielen auf eine preiswerte Erzeugung von Silizium für die Photovoltaik.

Typisch für diese Verfahren ist, dass Silizium in Form von Körnern unterschiedlicher Größe mit einem Siliziumgehalt von mehr als 90 % mit Reinigungslösungen behandelt wird. Hierzu zählen einzelne Säuren, Gemische verschiedener Säuren (z. B. Königswasser) oder Säuregemische mit Zusätzen weiterer Verbindungen (z. B. FeCl₃). Da verdünnte Säuren kaum zur effizienten Entfernung von Verunreinigungen führen, kommen die verwendeten Säuren meist in höheren Konzentrationen bis hin zur Maximalkonzentration zum Einsatz. Für die bekannten Verfahren ist es typisch, dass die Behandlung eine Dauer von mehreren Stunden erfordert und zudem noch bei höheren Temperaturen durchgeführt wird. Ebenso typisch ist die Abfolge von mehreren Behandlungsschritten, in denen entweder die gleiche Reinigungslösung mehrfach oder verschiedene Reinigungslösungen hintereinander zur Anwendung kommen.

Chemische Reinigungsverfahren haben sich bisher nicht durchgesetzt. Hierfür finden sich viele Gründe: (1) der Umgang mit einzelnen oder mehreren aggressiven und giftigen Chemikalien, (2) die Handhabung dieser Chemikalien und deren Mischungen bei höheren Temperaturen, (3) die sich daraus ergebenden Probleme bei der Entsorgung großer Mengen an Chemikalien, (4) die Materialanforderungen, die der Einsatz aggressiver Chemikalien an die Reaktionsbehälter stellt, (5) sehr lange Reaktionszeiten, typisch sind 6 bis 12 Stunden, (6) der hohe Materialverlust, d. h. der Abtrag von viel Silizium, und schließlich (7) die unzureichende Reinigungswirkung chemischer Verfahren, mit denen die Qualität von Solarsilizium häufig auch nicht annähernd erreicht wird.

Für die technische Anwendung sind zwei Forderungen von großer Bedeutung: Das Reinigungsverfahren soll schnell sein, und es sollen bei seiner Durchführung möglichst wenig Silizium-Verluste auftreten.

Aufgabe der vorliegenden Erfindung ist es daher, ein Verfahren zur Reinigung von Silizium anzugeben, das beiden Forderungen genügt. Außerdem soll eine Einrichtung zur Durchführung des Verfahrens angegeben werden. Das gereinigte Silizium soll sich für den Einsatz in der Photovoltaik eignen.

Die genannte Aufgabe wird bezüglich des Verfahrens erfindungsgemäß dadurch gelöst,
a) dass das Silizium einer flüssigen Reinigungschemikalie ausgesetzt wird, wodurch das Silizium und die Reinigungschemikalie ein chemisches Reaktionsgemisch bilden, in dem der chemische Reinigungsprozess stattfindet, wodurch metallische und/oder nicht-metallische Verunreinigungen zu einem Großteil aus dem Silizium entfernt werden, so dass nunmehr im chemischen Reaktionsgemisch gereinigtes Silizium vorliegt,
b) dass das chemische Reaktionsgemisch während des Reinigungsprozesses einem Atmosphärendruck von etwa 1 bar oder bevorzugt einem gegenüber Atmosphärendruck erhöhten Druck ausgesetzt wird, und/oder
c) dass das chemische Reaktionsgemisch während des Reinigungsprozesses einer gegenüber Zimmertemperatur erhöhten Temperatur ausgesetzt wird, und
d) dass das gereinigte Silizium aus dem chemischen Reaktionsgemisch entnommen wird.

Als erhöhte Temperatur wird hier bevorzugt eine Temperatur im Bereich von 50 Grad C bis 250 Grad C verstanden.

Die erhöhte Temperatur kann bei dem erfindungsgemäßen Verfahren
a) mittels einer externen thermischen Heizquelle oder
b) bevorzugt mittels einer Mikrowellen-Strahlungsquelle
   erzeugt werden.

Weitere vorteilhafte Weiterbildungen sind in den Unteransprüchen 3 bis 10 gekennzeichnet.

Die Aufgabe bezüglich der Angabe einer Einrichtung zur Durchführung des Verfahrens wird erfindungsgemäß durch jeweils eine in den Unteransprüchen 11 bis 18 gekennzeichnete Einrichtung gelöst.

Von Vorteil ist ein motorisches Rührgerät zum Durchmischen des chemischen Reaktionsgemisches.

Insbesondere bezüglich der Anwendung der Mikrowellen beim Reinigungsprozess ist folgendes festzuhalten: Es wurde ein Verfahren zur Behandlung von Silizium mit verschiedenen Chemikalien unter dem Einfluss von Mikrowellen entwickelt, mit dem die Gehalte an metallischen Verunreinigungen (z. B. Eisen, Aluminium, Titan, Kupfer, Mangan) und in geringem Umfang auch die nichtmetallischen Verunreinigungen Bor und Phosphor verringert werden. Die Vorteile dieses neuen Verfahrens bei Mikrowelleneinsatz sind:
1. die Reinigungswirkung ist höher als bei vergleichbaren Verfahren ohne Mikrowellenbehandlung,
2. die Reaktionsdauer ist erheblich geringer, und
3. es können Chemikalien geringerer Konzentration eingesetzt werden, was Prozess-und Entsorgungskosten verringert.

Zusammenfassend lässt sich folgendes sagen: Es handelt sich vorliegend um ein Verfahren, in dem Silizium mit einem Gehalt von mehr als 90 Gewichtsprozent Silizium und mit einer Korngröße kleiner als 500 µm in einem Schritt oder in mehreren aufeinander folgenden Schritten mit einer Chemikalie (meist eine wässrige oder wasserhaltige Lösung einer Säure) oder einem Gemisch verschiedener Chemikalien (meist eine wässrige oder wasserhaltige Lösung verschiedener Säuren, auch mit Zusatz weiter gelöster Stoffe, z. B. mit H₂O₂ oder FeCl₃ oder NH₄F oder NH₄HF₂), bei erhöhter Temperatur behandelt wird. Ausführungsformen zeichnen sich dadurch aus,
1. dass während der Behandlung in einem Reaktionsgefäß ein Druck größer als 1 bar durch äußere Hilfsmittel (technische Einrichtung, Verfahrensführung etc.) besteht bzw. aufgebaut wird, oder dass dieser Druck erst während der Behandlung durch die ablaufenden chemischen Reaktionen selbst entsteht, oder dass dieser Druck erst während der Behandlung durch externe Zufuhr von thermischer Energie entsteht,
2. dass die chemische Behandlung bei erhöhter Temperatur stattfindet, wobei die erhöhte Temperatur bei der chemischen Behandlung durch einen externen Energieeintrag, z. B. durch thermische Energie, insbesondere aber durch die Einwirkung von Mikrowellenstrahlung, erfolgt.

Das Verfahren eignet sich bevorzugt für Silizium mit einer Korngröße von kleiner als 250 µm, insbesondere für Silizium mit einer Korngröße von kleiner als 100 µm. Es ist auch ausdrücklich für die Reinigung von besonders feinteiligem Silizium mit einer Korngröße von kleiner als 5 µm und darunter geeignet.

Das Verfahren umfasst hierbei alle technischen Varianten zur Erzeugung eines Druckes von größer als 1 bar und der Temperaturerhöhung in einem Reaktionsgefäß durch Zufuhr von externer Energie, insbesondere durch die Einwirkung von Mikrowellenstrahlung. Ausführungsbeispiele für technische Umsetzungen werden im Folgenden anhand von 8 Figuren und 2 Tabellen näher erläutert. Es zeigen:
- Fig. 1: ein Druckgefäß, dem Siliziumpulver und eine flüssige Reinigungschemikalie zugeführt sind und das mit thermischer Strahlung oder mit Mikrowellenstrahlung beaufschlagt ist.
- Fig. 2: einen offenen Aufnahmebehälter für Siliziumpulver und eine Reinigungschemikalie, der in einem unter Druck stehenden Umgebungsbehälter untergebracht ist und der mit thermischer Strahlung oder mit Mikrowellenstrahlung beaufschlagt ist,
- Fig. 3: eine Rohrleitung, in der eine flüssige Reinigungschemikalie mit darin befindlichem Siliziumpulver strömt und die mit thermischer Strahlung oder mit Mikrowellenstrahlung beaufschlagt ist,
- Fig. 4: eine Rohrleitung entsprechend Fig. 3, bei der ein Abschnitt mit einer Absperrvorrichtung zur Unterbrechung des Stoff-Flusses versehen ist,
- Fig. 5: eine Rohrleitung mit einem behälterartig ausgebildeten Abschnitt, in der eine chemische Reinigungsflüssigkeit fließt und die mit Strahlung beaufschlagt ist,
- Fig. 6: eine Rohrleitung entsprechend Fig. 5, die mit einer Absperreinrichtung zur Unterbrechung des Stoff-Flusses in dem Rohr-Abschnitt versehen ist,
- Fig. 7: einen Teil einer Rohrleitung mit stationärer flüssiger Reinigungschemikalie und mit beweglichen Siliziumpulver-Körnern, wobei dieser Rohrteil mit Strahlung beaufschlagt ist, und wobei sich die Siliziumpulver-Körner, z. B. durch Sedimentieren, absetzen können, und
- Fig. 8: eine Rohrleitung entsprechend Fig. 7, wobei ein Abschnitt durch eine Absperrvorrichtung abgesperrt werden kann.

- Tabelle 1: die chemische Zusammensetzung einer Probe des Ausgangsmaterials (leicht verunreinigtes Silizium) vor einer Behandlung und die Zusammensetzung des erfindungsgemäß nach verschiedenen Verfahren gereinigten Materials, jeweils in mppm, und
- Tabelle 2: die prozentuale Abreicherung (in %) in den verschiedenen Behandlungsverfahren, und zwar bezogen auf den jeweiligen Elementgehalt des Ausgangsmaterials.

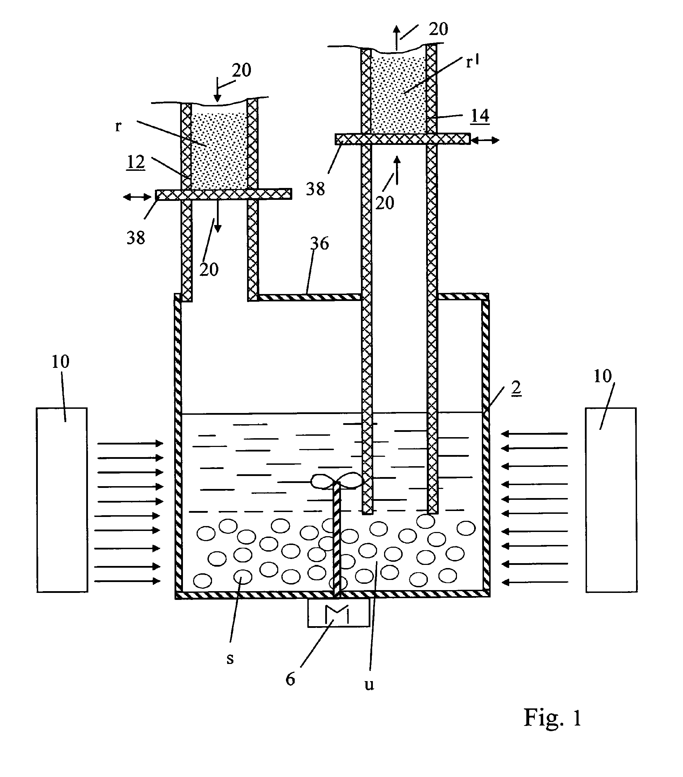

Nach Fig. 1 ist ein Druckbehälter (2) vorgesehen, der aus einem becherförmigen Gefäß mit einem druckdichten Verschluss (36) zum festen Verschließen besteht. Der Druckbehälter (2), der aus Kunststoff (z. B. aus PFA) besteht, besitzt einen druckdichten Verschluss (36), durch den feinkörniges Silizium (s) mit großer Korngrößenverteilung, z. B. im Bereich unter 250 µm, eingebracht werden kann. Er ist mit einer Befülleinrichtung zur diskontinuierlichen Zuführung (12) versehen, durch welche eine flüssige Reinigungschemikalie (r) (Säure, Chemikalien oder Chemikaliengemisch) in den Innenraum geleitet werden kann. Das nun im Druckbehälter (2) befindliche chemische Reaktionsgemisch (u) verbleibt entweder ruhend oder kann durch ein elektromotorisch oder magnetisch betriebenes Rührgerät (6) gut durchmischt werden. Dieses optional eingebrachte Rührgerät (6) besteht beispielsweise aus einem extern angebrachten Motor und einer intern durch diesen drehbare Flügelanordnung. Nach dem Ende des Reinigungsprozesses wird die teilweise verbrauchte Reinigungschemikalie (r') durch eine Einrichtung zum Entleeren (14) aus dem Druckbehälter (2) abgeführt. Das gereinigte Silizium (s') kann im Anschluss entweder entnommen werden, oder es erfolgt eine neue Reinigung durch Zufuhr einer unverbrauchten Reinigungschemikalie (r). Extern an der Seitenwand des Druckbehälters (2) ist eine Energiequelle (10) angeordnet. Diese kann eine Heizquelle zur Abgabe von thermischer Energie oder eine Quelle zur Abgabe von Mikrowellenstrahlung sein. Sie dient zur Erzeugung einer erhöhten Temperatur, die über Zimmertemperatur liegt, im chemischen Reaktionsgemisch (u) und zur Erzeugung eines erhöhten Drucks. Die Mikrowellen-Frequenz kann z. B. 915 MHz oder auch 2,45 GHz betragen.

Hieraus wird folgendes deutlich: Das Silizium (s) und die flüssige Reinigungschemikalie (r) liegen stationär in dem geschlossenen Druckbehälter (2) vor, in dem anfangs ein Druck kleiner oder größer von 1 bar herrscht, aber in dem ein Druck von größer als 1 bar während der chemischen Behandlung durch die ablaufende Reaktion aufgebaut wird. Dieser Druck wird während der chemischen Behandlung durch Zufuhr von Energie, insbesondere durch die Einwirkung von Mikrowellenstrahlung oder alternativ auch durch thermische Energie, aufgebaut.

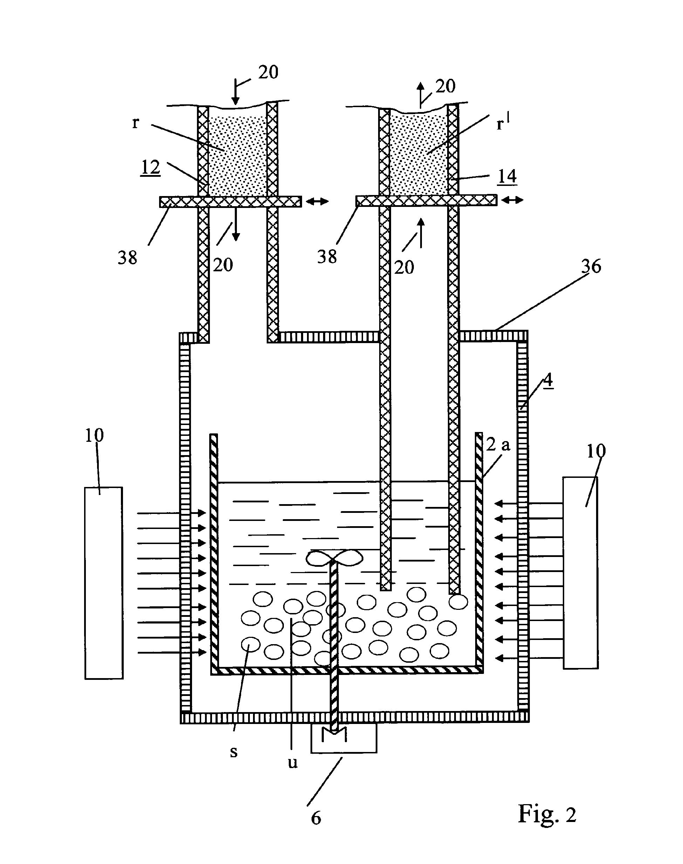

Nach der Ausführungsform von Fig. 2 liegen das feinkörnige Silizium (s) und die flüssige Reinigungschemikalie (r) als chemisches Reaktionsgemisch (u) in einem oben offenen Aufnahmebehälter 2a (z. B. aus Teflon) vor, der strahlendurchlässig ist. Dieser Aufnahmebehälter 2a sitzt in einem strahlungsdurchlässigen druckfesten Umgebungsbehälter (4), in dem ein Druck von 1 bar bis z. B. 30 bis 40 bar aufgebaut werden kann. Der Druck kann beispielsweise durch die Temperaturerhöhung infolge einer thermischen Erwärmung oder durch Mikrowellen-Bestrahlung des Aufnahmebehälters (2a) im Behälter selbst erzeugt werden. Ebenso kann der Druck durch Zufuhr eines Gases, beispielsweise Luft, Stickstoff oder Argon, in den Umgebungsbehälter (4) erzeugt werden. Der besseren Übersichtlichkeit wegen ist hier die Gaszufuhr nicht eingezeichnet. Mit anderen Worten: Über die Gaszufuhr kann ein definierter Umgebungsdruck im Aufnahmebehälter (2a) von größer oder gleich 1 bar, je nach Anforderung, sichergestellt werden. Das Befüllen und Entleeren mit einer Reinigungschemikalie (r und r') erfolgt durch geeignete Vorrichtungen zur diskontinuierlichen Zuführung (12) oder diskontinuierlichen Abführung einer Flüssigkeit (14). Auch hier ist extern eine Energiequelle (10) für thermische Energie oder Mikrowellen angeordnet.

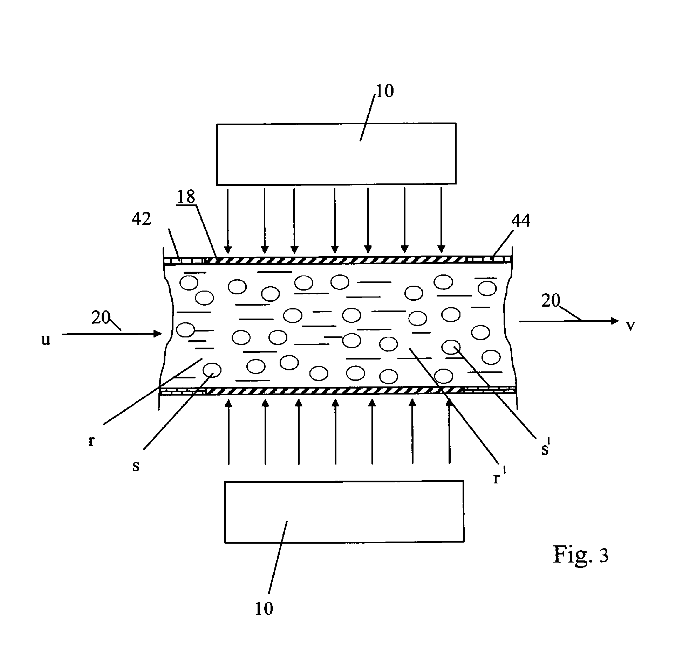

Festzuhalten ist hier, dass das Silizium (s) und die flüssige Reinigungschemikalie (r) stationär in dem offenen Aufnahmebehälter (2a) vorliegen, dass sich dieser Aufnahmebehälter (2a) aber in einer Umgebung befindet, in der bereits ein Druck größer von 1 bar herrscht oder in der sich dieser Druck während der chemischen Behandlung durch die ablaufende Reaktion aufbaut. Daneben baut sich dieser Druck während der chemischen Behandlung durch Zufuhr von Energie, hier gleichfalls durch die Einwirkung von Mikrowellenstrahlung oder auch durch Einstrahlung von thermischer Energie, auf. Nach Fig. 3 ist eine Rohrleitung (18) horizontal angeordnet, die zum Durchfluss des chemischen Reaktionsgemisches (u) aus dem feinkörnigen Silizium (s) und der flüssigen Reinigungschemikalie (r) bestimmt ist. Die Fließrichtung dieser Suspension ist durch einen Pfeil 20 gekennzeichnet. Eine nicht gezeigte Druckquelle dient zur Aufrechterhaltung eines Druckes von 1 bar oder mehr in der Rohrleitung (18). Dieser Druck kann verstärkt werden durch eine extern angeordnete Energiequelle (10). Gleichzeitig wird bei deren Betrieb auch eine erhöhte Temperatur im chemischen Reaktionsgemisch (u) erzeugt.

Festzuhalten ist hier, dass das chemische Reaktionsgemisch (u) eine mobile Phase bildet, welche in der Rohrleitung (18) gefördert wird. In dieser herrscht ein Druck von mehr als 1 bar. Das als Suspension vorliegende chemische Reaktionsgemisch (u) passiert dabei einen Abschnitt der Rohrleitung (18), in dem durch Einwirkung von Mikrowellenstrahlung oder von thermischer Energie eine Temperaturerhöhung in u erzeugt wird.

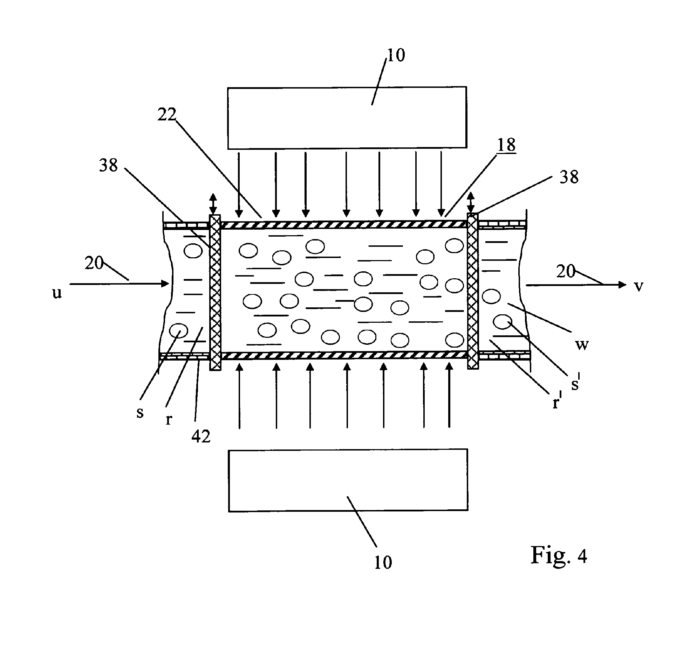

Nach Fig. 4 ist jeweils endseitig an einem Rohrsegment (22) der Rohrleitung (18) gemäß Fig. 3 eine dichtende Absperrvorrichtung (38) in Form von Schiebern zum Absperren dieses Rohrsegments (22) angebracht. In Fig. 4 ist die Sperrstellung gezeigt. Damit wird der Fluss des chemischen Reaktionsgemischs (u), d. h. der Suspension, unterbrochen. Der Übergang in die Öffnungsstellung ist durch zwei kleine Pfeile verdeutlicht. Auch hier ist extern eine Energiequelle 10 der oben näher bezeichneten Art angeordnet. Nach ihrem Einschalten wird im abgesperrten Rohsegment (22) das Reaktionsgemisch (u) erwärmt und dadurch ein Druck größer als 1 bar aufgebaut.

Bei Fig. 4 ist festzuhalten, dass das Silizium (s) und die Reinigungschemikalie (r) gemeinsam eine mobile Phase in Form des Reaktionsgemisches (u) bilden, die in der Rohrleitung (18) gefördert wird, in der zunächst ein Druck von nicht mehr als 1 bar herrscht. Hier kann aber in der Rohrleitung (18) ein Druck über 1 bar erzeugt werden, indem ein Rohrsegment (22) der Rohleitung (18) beidseitig verschlossen wird. Dann bewirkt die ablaufende chemische Reaktion eine Druckerhöhung. Alternativ oder gleichzeitig wird die in diesem Rohrsegment (22) eingeschlossene mobile Phase in Form des Reaktionsgemisches (u) durch Einwirkung der Mikrowellenstrahlung oder der thermischen Energie nach Einschalten der Energiequelle (10) erwärmt, und es stellt sich so eine (weitere) Druckerhöhung ein.

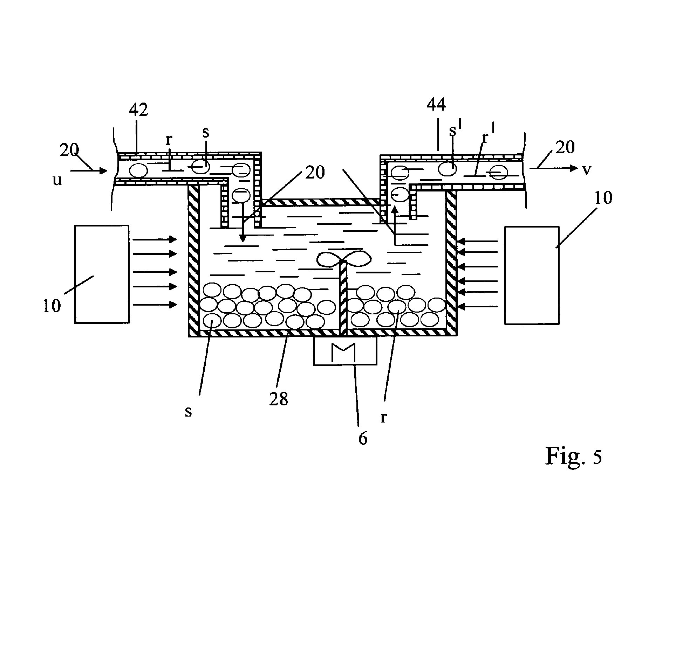

Nach Fig. 5 ist ein behälterartig ausgebildeter Abschnitt (28) einer Rohrleitung vorgesehen. Der Abschnitt (28) ist mit einem Einlass für das Reaktionsgemisch (u) versehen, der in Fig. 5 durch die Fördervorrichtung (42) dargestellt ist. Der Ausgang oder Ablass des Abschnitts (28), der zur Abführung des gereinigten Siliciums (s') und der teilweise verbrauchten Reinigungschemikalie (r') dient, wird durch die Fördervorrichtung (44) dargestellt. Die Fördervorrichtung (44) ist in Fig. 5 beispielhaft an der Oberseite des Abschnitts (28) eingezeichnet. Eine Positionierung zentral am Boden oder am Rand des Bodens von Abschnitt (28) ist ebenfalls möglich. Diese Bauweise würde dann einem geschlossenen Reaktor mit Zulauf oben und Ablauf unten entsprechen. Dieser behälterartig ausgebildete Abschnitt (28) nimmt neben der Reinigungschemikalie (r) auch das feinkörnige Silizium (s) auf. Extern ist am behälterartig ausgebildeten Abschnitt (28) wiederum eine Energiequelle 10 angeordnet.

Die Betriebsweise kann so gestaltet werden, dass entweder das Silizium (s) die stationäre Phase und die Reinigungschemikalie (r) die mobile Phase bildet, oder dass das ganze chemische Reaktionsgemisch (u) in Form einer Suspension gefördert wird. Im behälterartig ausgebildeten Abschnitt (28) und in den Fördervorrichtungen (42) und (44) herrscht ein Druck von mehr als 1 bar. Im Bereich des Abschnitts (28) erfolgt die Einwirkung von Mikrowellenstrahlung oder von thermischer Energie, wodurch eine Temperaturerhöhung erzeugt wird.

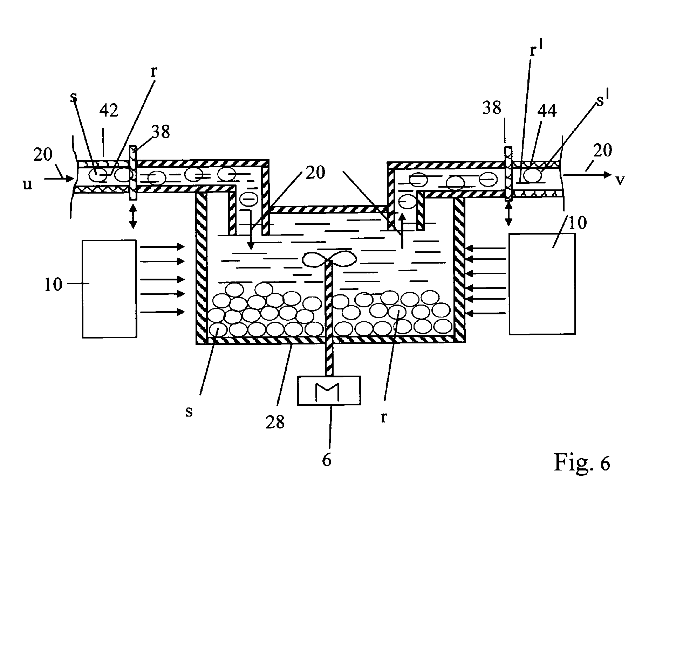

Nach Fig. 6 ist wiederum gemäß Fig. 5 ein behälterartig ausgebildeter Abschnitt (28) einer Rohrleitung vorgesehen. Wie ausgeführt, kann dieser Abschnitt (28) auch einem geschlossenen Behälter mit einem Zulauf oben und einem Ablauf unten entsprechen. Entsprechend Fig. 4 ist hier auch - den Abschnitt (28) eingrenzend - je eine Absperreinrichtung (38) vorgesehen. Sie dienen zur Unterbrechung des Stoffflusses (Fließrichtung (20))und zum Aufbau eines Drucks von mehr als 1 bar im Abschnitt (28), welcher zumindest im Bereich des Reaktionsgemisches (u) erwärmt wird.

Festzuhalten ist hier, dass das Silizium (s) die stationäre Phase und die Reinigungschemikalie (r) die mobile Phase bildet, aber auch das gesamte chemische Reaktionsgemisch (u) in Form einer Suspension gefördert werden kann. Das chemische Reaktionsgemisch (u) in Form einer Suspension oder die Reinigungschemikalie (r) wird mit Hilfe der Fördervorrichtung (42) in den behälterartig ausgebildeten Abschnitt (28) gefördert und durch die Fördervorrichtung (44) wieder aus Abschnitt (28) abgeführt. In den Fördervorrichtungen (42) und (44) herrscht ein Druck von nicht mehr als 1 bar, obwohl auch Drücke oberhalb von 1 bar möglich sind. In dem behälterartig ausgebildeten Abschnitt (28) kann aber ein höherer Druck erzeugt werden, indem der behälterartig ausgebildete Abschnitt (28) mit dem darin enthaltenen Reaktionsgemisch (u) beidseitig verschlossen wird. Eine Erhöhung von Druck und Temperatur wird in diesem Segment entweder durch die ablaufende chemische Reaktion oder durch Einwirkung von Mikrowellenstrahlung oder von thermischer Energie erzeugt.

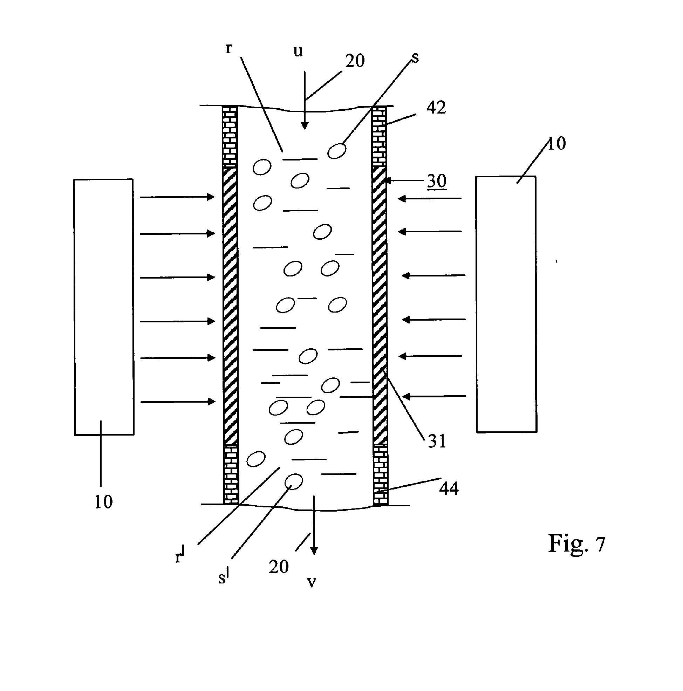

Nach Fig. 7 ist eine (beispielsweise senkrecht angeordnete) Rohrleitung (30) vorgesehen. Der Druck in der Rohrleitung (30) beträgt 1 bar oder mehr. Unten befindet sich ein (nicht gezeigter) Ausgang für das gereinigte Silizium (s'). Die Betriebsweise ist so gestaltet, dass die stationäre Phase die flüssige Reinigungschemikalie (r) darstellt, in der sich das feinkörnige Silizium (s) als mobile Phase befindet. Die in Fig. 7 eingezeichnete Fließrichtung (20) zeigt in Richtung der Schwerkraft. Sie kann auch in Richtung einer anderen, äußeren Kraft zeigen, z.B. einer Zentrifugalkraft. Auch hier ist eine Energiequelle (10) außen angeordnet. In einem Abschnitt der Rohrleitung (31) kann durch eine Energiequelle (10) der genannte Energieeintrag in Form von Mikrowellenstrahlung oder thermischer Energie erfolgen, wodurch eine Temperatur- und Druckerhöhung ermöglicht wird.

Festzuhalten ist also, dass das Silizium (s) die mobile Phase und dass die Reinigungschemikalie (r) die stationäre Phase bildet, und dass die mobile Phase sich innerhalb der stationären Phase in der Rohrleitung (30) bewegt (z. B. unter dem Einfluss der Schwerkraft im Sinne eines Absinkens oder einer Sedimentation in Bewegungsrichtung (20)). Wenn in der Rohrleitung (30) ein Druck von mehr als 1 bar herrscht und die mobile Phase dabei einen Abschnitt der Rohrleitung (31) passiert, in dem die stationäre Phase vorliegt, dann wird durch Einwirkung von Mikrowellenstrahlung oder von thermischer Energie im Abschnitt der Rohrleitung (31) eine Temperaturerhöhung erzeugt.

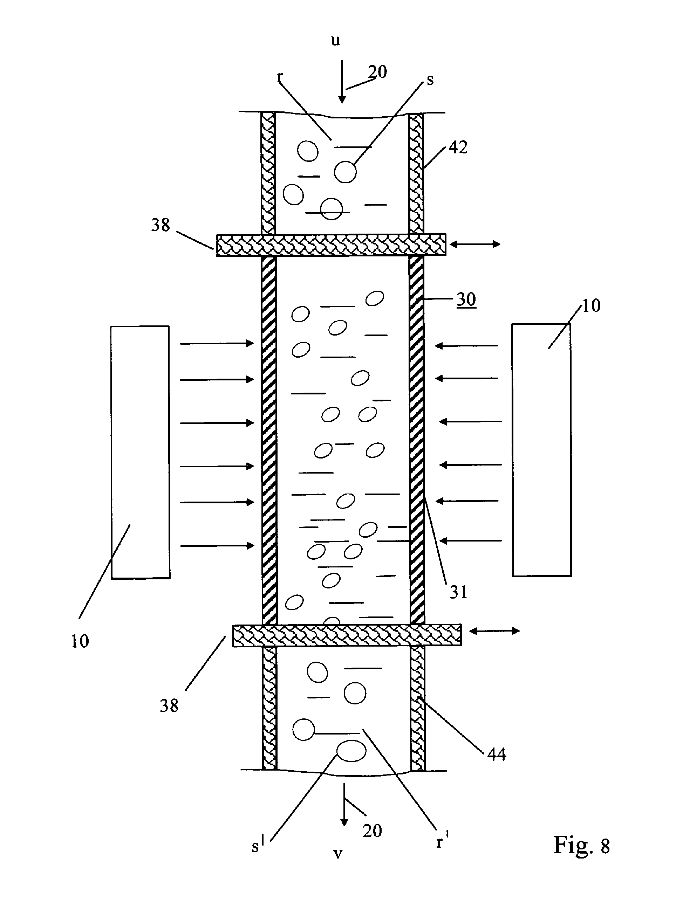

Die Ausführungsform nach Fig. 8 entspricht weitgehend derjenigen von Fig. 7. Jedoch ist hier zusätzlich eine Absperreinrichtung (38) in Form von zwei dichtenden Schiebern vorgesehen. Gezeigt ist die Absperrstellung. Die beiden Schieber können zwecks Übergangs in die Öffnungsstellung horizontal in Richtung der Pfeile verschoben werden. Die Absperreinrichtung (38) dient auch hier wieder dem Aufbau eines Drucks von mehr als 1 bar im gezeigten Abschnitt der Rohrleitung (31) mittels der Energiequelle (10).

Festzuhalten ist hier, dass das Silizium (s) die mobile Phase und die Reinigungschemikalie (r) die stationäre Phase bildet. Hier bewegt sich die mobile Phase innerhalb der stationären Phase in der Rohrleitung (30) (z. B. unter dem Einfluss der Schwerkraft im Sinne eines Absinkens oder einer Sedimentation in Bewegungsrichtung (20)). Wenn in der Rohrleitung (30) ein Druck von mehr als 1 bar herrscht, und wenn die mobile Phase dabei den genannten Abschnitt der Rohrleitung (31) passiert (dieser Abschnitt der Rohrleitung (31) bzw. ein dort eingebautes Reaktionsgefäß wird beidseitig verschlossen),dann wird hier durch die ablaufende chemische Reaktion oder durch Einwirkung von Mikrowellenstrahlung oder von thermischer Energie eine Temperaturerhöhung erzeugt.

Im Folgenden werden 4 Messbeispiele zum Vergleich der Wirkungsweise wiedergegeben, wobei die erzielten Messresultate in Tabelle 1 und Tabelle 2 festgehalten sind. Die Beispiele gelten für den Fall, dass das Silizium (s) und die Reinigungschemikalie (r) stationär in einem geschlossenen Druckbehälter (2) vorliegen und die chemische Behandlung bei erhöhter Temperatur und unter erhöhtem Druck stattfindet, wobei sich der Druck im Druckbehälter (2) unter der Einwirkung von Mikrowellenstrahlung und durch die ablaufende Reaktion erhöht.

Für alle in den nachfolgenden Beispielen beschriebenen Verfahren wurde Silizium der gleichen Qualität als Ausgangsmaterial eingesetzt. Hierbei handelt es sich um pulverförmiges Material mit einer Korngrößenverteilung, die durch die oberen Komdurchmesser einer Fraktion wie folgt gekennzeichnet ist: x₁₀ = 86,3 µm, x₅₀ = 185,5 µm und x₉₀ = 322,7 µm. Die chemische Zusammensetzung, die mittels ICP-MS (= Induktivgekoppeltes Plasma mit Massenspektrometer) bestimmt wurde, ist in Tabelle 1 in der mit "Ausgangsmaterial" bezeichneten Zeile angegeben.

### 1. Behandlung im offenen Gefäß bei erhöhter Temperatur auf einer Heizplatte

1 g des o. g. Siliziums wurde abgewogen und in einen 100 ml fassenden PFA-Becher (PFA =Perfluoralkoxypolymer-Kunststoff) vorgelegt. In diesen Becher wurden 7 ml verdünnte Flusssäurelösung (10v/v% HF, suprapur) zugegeben. Das Gefäß wurde mit einem Uhrglas aus Teflon locker abgedeckt und auf einer Heizplatte erwärmt. Nach Erreichen der gewünschten Behandlungstemperatur von 70° C wurde das Gemisch für 4 Stunden bei 70° C belassen und danach wieder abgekühlt. Anschließend wurde das Gemisch filtriert. Das Silizium befand sich auf dem Filter, wo es mit Reinstwasser (18 MΩ) mehrfach gewaschen wurde. Nach dem chemischen Aufschluss des Siliziums wurden die verbliebenen Verunreinigungsgehalte mittels ICP-MS analysiert. Das Analysenergebnis ist in Tabelle 1 in der mit "HF-Behandlung Heizplatte" bezeichneten Zeile A angegeben.

### 2. Einmalige Behandlung bei erhöhter Temperatur und bei erhöhtem Druck in der Mikrowelle.

1 g des o. g. Siliziums wurde abgewogen und in ein 100 ml fassendes PFA-Mikrowellengefäß vorgelegt. In dieses Mikrowellengefäß wurden 7 ml verdünnte Flusssäurelösung (10v/v% HF, suprapur) zugegeben. Das Gefäß wurde mit einem entsprechenden Deckel druckdicht fest verschlossen, innerhalb von 20 Minuten auf 180° C (erhöhte Temperatur, Entstehung eines Überdrucks) aufgeheizt und für 15 Minuten (kein Dauerversuch) bei dieser Temperatur belassen. Danach kühlte das Mikrowellengefäß unter Verwendung einer Lüftungskühlung über einen Zeitraum von 30 Minuten ab. Dann wurde das Gefäß dem Mikrowellengerät entnommen, und der Deckel wurde vorsichtig geöffnet, wobei der im Gefäß herrschende Überdruck entwich. Anschließend wurde das Gemisch filtriert. Das Silizium befand sich auf dem Filter, wo es mit Reinstwasser (18 MΩ) mehrfach gewaschen wurde. Nach dem chemischen Aufschluss des Siliziums wurden die verbliebenen Verunreinigungsgehalte mittels ICP-MS analysiert. Das Analysenergebnis ist in Tabelle 1 in der mit "einmalige HF-Behandlung Mikrowelle" bezeichneten Zeile B angegeben.

### 3. Einmalige Behandlung bei erhöhter Temperatur und bei erhöhtem Druck in der Mikrowelle im Dauerversuch

1 g des o. g. Siliziums wurde abgewogen und in ein 100 ml fassendes PFA-Mikrowellengefäß vorgelegt. In dieses Mikrowellengefäß wurden 7 ml verdünnte Flusssäurelösung (10v/v% HF, suprapur) zugegeben. Das Gefäß wurde mit einem entsprechenden Deckel druckdicht fest verschlossen, innerhalb von 20 Minuten auf 130° C (erhöhte Temperatur) aufgeheizt und für 5 Stunden (Dauerversuch) bei dieser Temperatur belassen. Danach kühlte das Mikrowellengefäß unter Verwendung einer Lüftungskühlung über einen Zeitraum von 30 Minuten ab. Dann wurde das Gefäß dem Mikrowellengerät entnommen, und der Deckel wurde vorsichtig geöffnet, wobei der im Gefäß herrschende Überdruck entwich. Anschließend wurde das Gemisch filtriert. Das Silizium befand sich auf dem Filter, wo es mit Reinstwasser (18 MΩ) mehrfach gewaschen wurde. Nach dem chemischen Aufschluss des Siliziums wurden die verbliebenen Verunreinigungsgehalte mittels ICP-MS analysiert. Das Analysenergebnis ist in Tabelle 1 in der mit "einmalige HF-Behandlung Mikrowelle Dauerversuch" bezeichneten Zeile C angegeben.

### 4. Fünfmalige Behandlung bei erhöhter Temperatur und bei erhöhtem Druck in der Mikrowelle

1 g des o. g. Siliziums wurde abgewogen und in ein 100 ml fassendes PFA-Mikrowellengefäß vorgelegt. In dieses Mikrowellengefäß wurden 7 ml verdünnte Flusssäurelösung (10v/v% HF, suprapur) zugegeben. Das Gefäß wurde mit einem entsprechenden Deckel druckdicht fest verschlossen, innerhalb von 20 Minuten auf 180° C aufgeheizt (erhöhte Temperatur, erhöhter Druck) und für 15 Minuten (kein Dauerversuch) bei dieser Temperatur belassen. Danach kühlte das Mikrowellengefäß unter Verwendung einer Lüftungskühlung über einen Zeitraum von 30 Minuten ab. Dann wurde das Gefäß dem Mikrowellengerät entnommen, und der Deckel wurde vorsichtig geöffnet, wobei der im Gefäß herrschende Überdruck entwich. Anschließend wurde das Gemisch filtriert. Das Silizium befand sich auf dem Filter, wo es mit Reinstwasser (18 MΩ) mehrfach gewaschen wurde.

Das so erhaltene Silizium wurde wieder in ein Mikrowellengefäß eingebracht und erneut mit 7 ml verdünnter Flusssäurelösung (10v/v% HF, suprapur) versetzt. Nach dem Verschließen des Gefäßes wurde es dem identischen Temperaturprogramm unterworfen. Nach erneutem Abfiltrieren und Waschen des Silizium s wurde die beschriebene Prozedur erneut gestartet. Insgesamt durchlief das Silizium fünf Mal eine Behandlung mit verdünnter Flusssäure in der Mikrowelle bei 180° C. Die Gesamtdauer der Behandlung in der Mikrowelle bei 180° C betrug 100 Minuten. Nach dem Waschen des Siliziums im Anschluss an die fünfte Mikrowellenbehandlung wurde das Silizium chemisch aufgeschlossen, und die verbliebenen Verunreinigungsgehalte wurden mittels ICP-MS analysiert. Das Analysenergebnis ist in Tabelle 1 in der mit "fünfmalige HF-Behandlung Mikrowelle" bezeichneten Zeile D angegeben.

Der Vergleich der 4 dargelegten Verfahren (Tabelle 1 und 2) zeigt die hohe Effizienz der Mikrowellenbehandlung beim chemischen Reinigen von Silizium. Eine einmalige Behandlung in der Mikrowelle (Zeile B1) führt beim Einsatz gleicher Chemikalienmengen und Konzentrationen bereits nach einer Behandlungsdauer von 15 Minuten bei 180° C zu reinerem Silizium als eine Behandlungsdauer von 4 Stunden bei 70° C auf der Heizplatte (Zeile A1). Dieser einmalige Reinigungsschritt ist dabei schon so effizient, dass mit der verwendeten Reinigungschemikalie der größte Anteil der entfernbaren Verunreinigungen bereits entfernt wird. Eine 5 Stunden andauernde Behandlung (Zeile C1) bringt nur eine unwesentliche Verringerung des Verunreinigungsgehaltes. Wird die einmalige Behandlung in der Mikrowelle fünf Mal hintereinander durchgeführt, erhöht sich die Reinigungseffizienz noch einmal (Zeile D1). Als Ursache kann vermutet werden, dass die jeweils frisch zugegebene Säure diesen Reinigungseffekt bewirkt. Dies spricht dafür, dass die Reinigung mehrstufig mit der gleichen Chemikalie bzw. dem gleichen Chemikaliengemisch durchgeführt werden sollte. Die Verwendung einer anderen Chemikalie bzw. eines anderen Chemikaliengemisches zur Reinigung des Siliziums ist aber zu empfehlen.

Eine besondere Beachtung erfordern die Gehalte an Bor B und Phosphor P. Innerhalb der Meßunsicherheit von ca. ± 4 % des angegebenen Analysenwertes sind die Gehalte dieser Elemente B, P unabhängig vom Reinigungsschritt als annähernd gleich anzusehen. Es zeigt sich, dass durch eine chemische Behandlung von Silizium keinerlei oder nur eine geringe Verringerung der Gehalte von Bor und Phosphor erzielt werden kann, die vermutlich nur dann stattfindet, wenn Anteile dieser in Form boridischer oder phosphidischer Verbindungen mit den metallischen Verunreinigungen vorliegen.
19 Patentansprüche
8 Figuren
2 Tabellen

**Tabelle 1**

| | Fe | Al | Ca | Ti |
|---|---|---|---|---|
| Ausgangsmaterial | 2412, 1 | 3411, 9 | 259,9 | 382,0 |
| HF-Behandlung Heizplatte | 231,8 | 196,8 | 194,6 | 28,4 |
| einfache HF-Behandlung Mikrowelle | 171,4 | 104,6 | 25,8 | 28,5 |
| einfache HF-Behandlung Mikrowelle Dauerversuch | 171,2 | 95,5 | 27,6 | 27,4 |
| fünfmalige HF-Behandlung Mikrowelle | 123,9 | 75,0 | 19,9 | 20,5 |

**Tabelle 2**

| | Fe | Al | Ca | Ti |
|---|---|---|---|---|
| HF-Behandlung Platte | 90,4 | 94,2 | 25,1 | 92,6 |
| einfache HF-Behandlung Mikrowelle | 92,9 | 96,9 | 90,1 | 92,5 |
| einfache HF-Behandlung Mikrowelle Dauerversuch | 92,9 | 97,2 | 89,4 | 92,8 |
| fünfmalige HF-Behandlung Mikrowelle | 94,9 | 97,8 | 92,4 | 94,6 |

### Bezugszeichenliste

- 2: Druckbehälter, welcher der Einwirkung der Energiequelle (10) unterliegt
- 2a: offener Aufnahmebehälter
- 4: druckfester Umgebungsbehälter
- 6: Rührgerät
- 10: Energiequelle
- 12: Vorrichtung zur diskontinuierlichen Zuführung einer Flüssigkeit - Befülleinrichtung
- 14: Vorrichtung zur diskontinuierlichen Abführung einer Flüssigkeit - Einrichtung zum Entleeren
- 18: druckbeständige Rohrleitung, welche der Einwirkung der Energiequelle (10) unterliegt
- 20: Fließrichtung
- 22: druckdicht abgesperrtes Rohrsegment
- 28: druckbeständiger, behälterartig ausgebildeter Abschnitt bzw. druckbeständiger Behälter, welcher der Einwirkung der Energiequelle (10) unterliegt
- 30: Rohrleitung, druckbeständig, welche der Einwirkung der Energiequelle (10) unterliegt. Parallel zur Richtung der äußeren Krafteinwirkung angeordnet, welche den Transport des Siliziums s und s' bewirkt - z.B. die Schwerkraft oder eine Zentrifugalkraft.
- 31: Abschnitt der Rohrleitung 30, welcher unter Einwirkung einer Energiequelle (10) steht
- 36: druckdichter Verschluss (zum Öffnen und Verschließen eines Druckbehälters)
- 38: druckfeste Absperreinrichtung
- 42: Fördervorrichtung zur kontinuierlichen und diskontinuierlichen Zuführung von Silizium (s), einer Reinigungschemikalie (r) oder eines chemischen Reaktionsgemisches (u), druckdicht
- 44: Fördervorrichtung zur kontinuierlichen und diskontinuierlichen Abführung von Silizium (s'), einer Reinigungschemikalie (r') oder eines chemischen Reaktionsgemisches (v), druckdicht
- s: Silizium (ungereinigt, vor der chemischen Behandlung/Reinigung)
- r: Reinigungschemikalie (unverbraucht, vor der chemischen Behandlung/Reinigung)
- s': gereinigtes Silizium (nach der chemischen Behandlung/Reinigung)
- r': teilweise verbrauchte Reinigungschemikalie (nach der chemischen Behandlung/Reinigung)
- u: chemisches Reaktionsgemisch (Suspension aus ungereinigtem Silizium (s) und Reinigungschemikalie (r))
- v: chemisches Reaktionsgemisch (Suspension aus gereinigtem Silicium (s') und teilweise verbrauchter Reinigungschemikalie (r'))

## Patentansprüche

1. Verfahren zur Erhöhung der Reinheit von Silizium (s), das einen Gehalt von mehr als 90 Gewichtsprozent Silizium aufweist, in fein zerkleinerter Form vorliegt und Korngrößen kleiner als 500 µm, vorzugsweise kleiner als 250 µm, besitzt, durch einen chemischen Reinigungsprozess, **dadurch gekennzeichnet,**
a) **dass** das Silizium (s) einer flüssigen Reinigungschemikalie (r) ausgesetzt wird, wodurch das Silizium (s) und die Reinigungschemikalie (r) ein chemisches Reaktionsgemisch (u) bilden, in der ohne oder mit Energiezufuhr der chemische Reinigungsprozess stattfindet, wodurch metallische und/oder nicht-metallische Verunreinigungen zu einem Großteil aus dem Silizium (s) entfernt werden, so dass nunmehr ein chemisches Reaktionsgemisch (v), bestehend aus gereinigtem Silizium (s') und der teilweise verbrauchten Reinigungschemikalie(r'), vorliegt,
b) **dass** das chemische Reaktionsgemisch (u) während des Reinigungsprozesses einem Atmosphärendruck von etwa 1 bar oder bevorzugt einem gegenüber Atmosphärendruck erhöhten Druck ausgesetzt wird, und/oder
c) **dass** das chemische Reaktionsgemisch (u) während des Reinigungsprozesses einer gegenüber Zimmertemperatur erhöhten Temperatur ausgesetzt wird, und
d) **dass** das gereinigte Silizium (s') aus dem chemischen Reaktionsgemisch (v), bestehend aus gereinigtem Silizium (s') und der teilweise verbrauchten Reinigungschemikalie (r'), entnommen wird.

2. Verfahren nach Anspruch 1, **dadurch gekennzeichnet, dass** die erhöhte Temperatur mittels einer externen Energiequelle (10) erzeugt wird, welche ausgebildet ist als
a) thermische Heizquelle oder
b) Mikrowellen-Strahlungsquelle.

3. Verfahren nach Anspruch 1 oder 2, **dadurch gekennzeichnet, dass** die erhöhte Temperatur im Bereich von 200° C liegt.

4. Verfahren nach Anspruch 1, 2 oder 3, **dadurch gekennzeichnet, dass** als flüssige Reinigungschemikalie (r) eine wässrige oder wasserhaltige Säure verwendet wird.

5. Verfahren nach einem der Ansprüche 1 bis 3, **dadurch gekennzeichnet, dass** als flüssige Reinigungschemikalie (r) eine wässrige oder wasserhaltige Lösung verschiedener Säuren verwendet wird.

6. Verfahren nach Anspruch 4 oder 5, **dadurch gekennzeichnet, dass** die Reinigungschemikalie (r) einen Zusatz eines gelösten Stoffes enthält.

7. Verfahren nach Anspruch 6, **dadurch gekennzeichnet, dass** der Zusatz einen Stoff aus der Reihe H₂O₂, HF, H₂SO₄, H₃PO₄, FeCl₃, HCl, NH₄F und NH₄HF₂ enthält.

8. Verfahren nach einem der Ansprüche 1 bis 7, **dadurch gekennzeichnet, dass** das Silizium (s) ein solches mit einer Korngröße unter 100 µm, bevorzugt unter 5 µm, ist.

9. Verfahren nach einem der Ansprüche 1 bis 8, **dadurch gekennzeichnet, dass** der gegenüber Atmosphärendruck erhöhte Druck und/oder die gegenüber Zimmertemperatur erhöhte Temperatur durch die während des chemischen Reinigungsprozesses ablaufende Reaktion erzeugt wird.

10. Verfahren nach einem der Ansprüche 1 bis 9, **dadurch gekennzeichnet, dass** zumindest während des chemischen Reaktionsprozesses das chemische Reaktionsgemisch (u) am Strömen gehalten wird.

11. Einrichtung zur Erhöhung der Reinheit von Silizium (s) zur Durchführung des Verfahrens nach einem der Ansprüche 1 bis 10, **gekennzeichnet durch**
a) einen Druckbehälter (2) zur Aufnahme des chemischen Reaktionsgemisches (u) aus dem feinkörnigen Silizium (s) und der flüssigen Reinigungschemikalie (r), wobei der Druckbehälter (2) eine Befülleinrichtung (12) und eine Einrichtung zum Entleeren (14) aufweist, und
b) eine extern angeordnete Energiequelle (10) zur Erzeugung der erhöhten Temperatur im chemischen Reaktionsgemisch (u). (Fig. 1)

12. Einrichtung zur Erhöhung der Reinheit von Silizium (s) zur Durchführung des Verfahrens nach einem der Ansprüche 1 bis 10, **gekennzeichnet durch**
a) einen Aufnahmebehälter (2a), zur Aufnahme des chemischen Reaktionsgemisches (u) aus dem feinkörnigen Silizium (s) und der flüssigen Reinigungschemikalie (r), wobei der Aufnahmebehälter (2a) eine Befülleinrichtung (12) und eine Einrichtung zum Entleeren (14) aufweist,
b) einen um den Aufnahmebehälter (2a) angeordneten druckfesten Umgebungsbehälter (4), in dem ein vorbestimmter Umgebungsdruck von 1 bar oder mehr aufrecht erhaltbar ist, und
c) eine extern angeordnete Energiequelle (10) zur Erzeugung der erhöhten Temperatur im chemischen Reaktionsgemisch (u). (Fig. 2)

13. Einrichtung zur Erhöhung der Reinheit von Silizium (s) zur Durchführung des Verfahrens nach einem der Ansprüche 1 bis 10, **gekennzeichnet durch**
a) eine Rohrleitung (18) zum Durchfluss des chemischen Reaktionsgemisches (u) aus dem feinkörnigen Silizium (s) und der flüssigen Reinigungschemikalie (r),
b) eine Druckquelle, die zur Aufrechterhaltung eines Druckes von 1 bar oder mehr in der Rohrleitung (18) dient, und
c) eine extern angeordnete Energiequelle(10) zur Erzeugung der erhöhten Temperatur im chemischen Reaktionsgemisch (u). (Fig. 3)

14. Einrichtung zur Erhöhung der Reinheit von Silizium (s) zur Durchführung des Verfahrens nach einem der Ansprüche 1 bis 10, **gekennzeichnet durch**
a) eine Rohrleitung (18) zum Durchfluss des chemischen Reaktionsgemisches (u) aus dem feinkörnigen Silizium (s) und der flüssigen Reinigungschemikalie (r),
b) eine Druckquelle, die zur Aufrechterhaltung eines Druckes von 1 bar oder mehr in der Rohrleitung (18) dient,
c) eine extern angeordnete Energiequelle (10) zur Erzeugung der erhöhten Temperatur im chemischen Reaktionsgemisch (u), und
d) eine druckfeste Absperreinrichtung (38) zum Absperren eines Rohrsegments (22) und damit zur Unterbrechung des Flusses des chemischen Reaktionsgemisches (u) und für den Aufbau eines Druckes größer als 1 bar im Rohrsegment (22) **durch** die auf das Rohrsegment (22) einwirkende Energiequelle (10). (Fig. 4)

15. Einrichtung zur Erhöhung der Reinheit von Silizium (s) zur Durchführung des Verfahrens nach einem der Ansprüche 1 bis 10, **gekennzeichnet durch**
a) eine Fördervorrichtung (42) des chemischen Reaktionsgemisches (u), bestehend aus metallurgischem Silizium (s) in einer flüssigen Reinigungschemikalie (r), sowie mit einer weiteren Fördervorrichtung (44) des chemischen Reaktionsgemisches (v), bestehend aus gereinigtem Silizium (s') und teilweise verbrauchter Reinigungschemikalie (r'),
b) einen behälterartig ausgebildeten Abschnitt (28), der das chemische Reinigungsgemisch (u), bestehend aus der Reinigungschemikalie (r) und dem feinkörnigen Silizium (s), aufnimmt,
c) eine Druckquelle, die zur Aufrechterhaltung eines Druckes von 1 bar oder mehr im behälterartig ausgebildeten Abschnitt (28) dient,
d) eine extern am behälterartig ausgebildeten Abschnitt (28) angeordnete Energiequelle (10) zur Erzeugung der erhöhten Temperatur im chemischen Reaktionsgemisch (u), das sich gerade in diesem behälterartig ausgebildeten Abschnitt (28) befindet, und
e) eine extern angeordnete Energiequelle(10) zur Erzeugung der erhöhten Temperatur im chemischen Reaktionsgemisch (u). (Fig. 5)

16. Einrichtung zur Erhöhung der Reinheit von Silizium (s) zur Durchführung des Verfahrens nach einem der Ansprüche 1 bis 10, **gekennzeichnet durch**
a) eine Fördervorrichtung (42) für das chemische Reaktionsgemisch (u), bestehend aus metallurgischem Silizium (s) einer flüssigen Reinigungschemikalie (r), sowie mit einer weiteren Fördervorrichtung (44) für die Abführung des chemischen Reaktionsgemisches (v), bestehend aus gereinigtem Silizium (s') und teilweise verbrauchter Reinigungschemikalie (r'),
b) einen behälterartig ausgebildeten Abschnitt (28), der das chemische Reinigungsgemisch (u), bestehend aus der Reinigungschemikalie (r) und dem feinkörnigen Silizium (s), aufnimmt,
c) eine Druckquelle, die zur Aufrechterhaltung eines Druckes von 1 bar oder mehr im behälterartig ausgebildeten Abschnitt (28) dient,
d) eine extern angeordnete Energiequelle (10) zur Erzeugung der erhöhten Temperatur im chemischen Reaktionsgemisch (u), und
e) eine Absperreinrichtung (38) zum Absperren des behälterartigen Abschnitts (28) und damit zur Unterbrechung des Flusses des chemischen Reaktionsgemisches (u) **durch** diesen Abschnitt (28) und für den Aufbau eines Druckes größer als 1 bar im Abschnitt (28) **durch** die auf den Abschnitt (28) einwirkende Energiequelle (10). (Fig. 6)

17. Einrichtung zur Erhöhung der Reinheit von Silizium (s) zur Durchführung des Verfahrens nach einem der Ansprüche 1 bis 10, **gekennzeichnet durch**
a) eine Rohrleitung (30) zur Aufnahme des chemischen Reaktionsgemisches (u), bestehend aus metallurgischem Silizium (s) und einer flüssigen Reinigungschemikalie (r), wobei sich die Reinigungschemikalie (r) stationär in der Rohrleitung (30) befindet und sich die Körner des Siliziums (s) bewegen, beispielsweise **durch** Absetzen oder Sedimentieren unter Wirkung der Schwerkraft,
b) eine Druckquelle, die zur Aufrechterhaltung eines Druckes von 1 bar oder mehr in der Rohrleitung (30) dient, und
c) eine extern angeordnete Energiequelle (10) zur Erzeugung der erhöhten Temperatur in dem chemischen Reaktionsgemisches (u), die sich in der betreffenden Rohrleitung (30) befindet. (Fig. 7)

18. Einrichtung zur Erhöhung der Reinheit von Silizium (s) zur Durchführung des Verfahrens nach einem der Ansprüche 1 bis 10, **gekennzeichnet durch**
a) eine Rohrleitung (30) zur Aufnahme des chemischen Reaktionsgemisches (u), bestehend aus Silizium (s) und einer flüssigen Reinigungschemikalie (r), wobei sich die Reinigungschemikalie (r) stationär in der Rohrleitung (30) befindet und sich die Körner des Siliziums (s) bewegen, beispielsweise **durch** Absetzen oder Sedimentieren unter Wirkung der Schwerkraft,
b) eine Absperreinrichtung (38) zum Absperren einer Rohrleitung (30) und damit zur Unterbrechung der Bewegung der Körner des Siliziums (s) oder der Fließrichtung (20) des chemischen Reaktionsgemisches (u) in der Rohrleitung (30), und
c) eine extern angeordnete Energiequelle (10), die das in der Rohrleitung (30) befindliche chemische Reaktionsgemisch (u) zu einer erhöhten Temperatur führt und gleichzeitig den Aufbau eines Druckes größer als 1 bar in der Rohrleitung (30) erzeugt. (Fig. 8)

19. Einrichtung nach einem der Ansprüche 11 bis 18, **dadurch gekennzeichnet, dass** eine Rührgerät (6) zum Durchmischen des chemischen Reaktionsgemisches (u) vorgesehen ist.
